# EUROPEAN PATENT APPLICATION

(11) **EP 4 851 910 A1**
(43) Date of publication of application: **09.12.2026**
(21) Application number: 26182769.5
(22) Date of filing: 03.06.2026
(51) Int. Cl.: G06Q 40/12, G06F 8/65

(54) **MICRO PATCHES FOR EDGE PROVISIONED CONTAINERIZED TRANSACTION TAX ENGINES**

(30) Priority: 06.06.2025 US 202519231326
(71) Applicant: Vertex, Inc., King of Prussia, Pennsylvania 19406 (US)
(72) Inventor: TANDON, Jas, King of Prussia, PA 19406 (US)
(74) Representative: HKW Intellectual Property PartG mbB

(57) **Abstract**

Examples are disclosed related to updating edge tax databases with a micro patch. One aspect provides a computing system comprising endpoint devices in different geographic locations and a transaction tax server. The transaction tax server includes a global tax rules database including tax rule data, and also a patch generation module configured to determine changed data for the tax rule data, and publish a micro patch including the changed data and excluding a remainder of the global tax rules database. Further, each endpoint device comprises a transaction tax engine container configured with an associated subset of tax rule data that is applicable to an associated geographic location of the endpoint device and excluding a remainder of the global tax rules database. A patch application module is configured to download the micro patch and to apply the changed data to the associated subset of tax rule data.

## Description

### BACKGROUND

Tax rules around the world are complicated and vary across different tax jurisdictions. For example, a tax client can have a set of applicable taxes for each location where the tax client processes transactions. To handle transaction tax calculations in such different geographic locations, the tax client may utilize corresponding edge transaction tax engine containers to calculate taxes applicable to transactions for goods and/or services in an associated geographic location. Each edge transaction tax engine container includes an edge database comprising an associated subset of tax rule data applicable to the associated geographic location. This enables the tax client to not support a local copy of a global tax rules database which requires significant memory.

However, the global tax rules change with sufficient frequency to require regular updates to the edge databases of the tax client. Current systems for updating the edge databases involve full container rebuilds and/or redeployments of new container images. This may be bandwidth-intensive, time intensive to support manual validation of redeployed containers at endpoint devices, and/or lead to service disruptions at the endpoint devices.

### SUMMARY

To address the above issues, a computer system is provided that utilizes a micro patch for updating edge tax databases. The computer system has server-side and client-side aspects. According to one aspect, the computing system comprises a plurality of endpoint devices in different geographic locations and a transaction tax server including a global tax rules database including tax rule data for multiple products and multiple tax jurisdictions. The transaction tax server further includes a patch generation module configured to determine changed data for the tax rule data, and publish a micro patch for download by the plurality of endpoint devices. The micro patch includes the changed data and excludes a remainder of the tax rule data in the global tax rules database. Further, each endpoint device of the plurality of endpoint devices comprises a transaction tax engine container configured with an associated subset of tax rule data that is applicable to an associated geographic location of the endpoint device. The transaction tax engine container includes an edge database comprising the associated subset of tax rule data and excluding a remainder of the tax rule data in the global tax rules database. The transaction tax engine container further includes a patch application module configured to download the micro patch and also to apply the changed data in the micro patch to the associated subset of tax rule data. Other aspects of the system are described below.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

FIG. 1 shows a block diagram of a computing system according to one example of the present disclosure.
FIG. 2 shows an example global tax rules database on a transaction tax server of the computing system of FIG. 1.
FIG. 3 shows a detailed block diagram of the transaction tax server of FIG. 1 utilizing a patch generation module.
FIG. 4 shows an example micro patch published by the patch generation module of FIG. 3.
FIG. 5 shows a detailed block diagram of an example endpoint device of the computing system of FIG. 1.
FIG. 6 shows an example flow diagram of the endpoint device of FIG. 6 utilizing a patch application module.
FIGS. 7A and 7B show a flowchart of an example method for updating edge databases at a plurality of endpoint devices, according to one example of the present disclosure.
FIG. 8 shows a block diagram of an example computing environment in which the computer system of FIG. 1 may be enacted.

### DETAILED DESCRIPTION

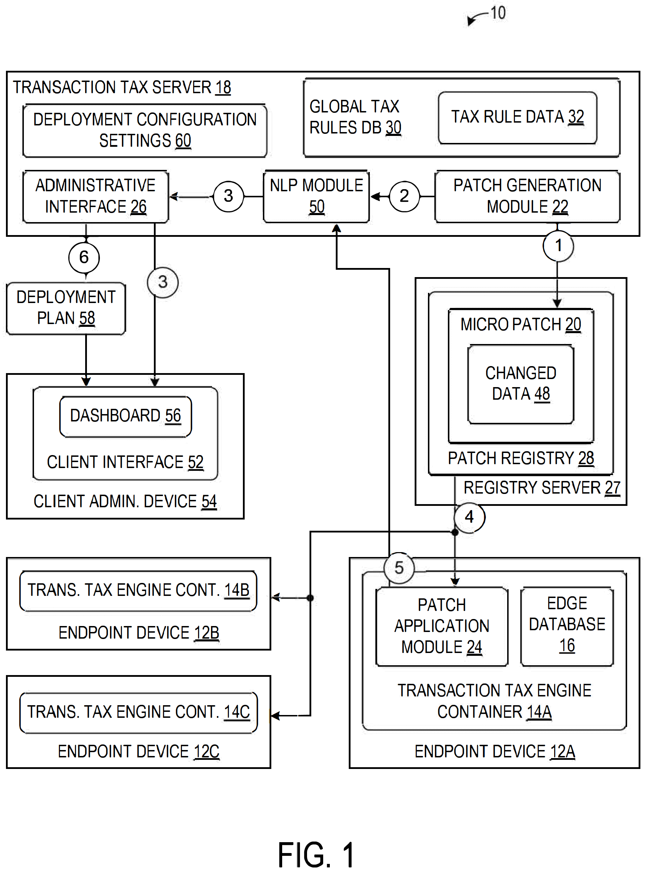

As mentioned above, a tax client may deploy transaction tax engine containers to determine edge tax calculations in different geographic locations. An example computing system 10 for updating tax rules in such deployed transaction tax engine containers is schematically shown in FIG. 1. Briefly, the computing system 10 comprises a plurality of endpoint devices 12 in different geographic locations. Here, a first endpoint device 12A comprises a corresponding transaction tax engine container 14A configured with an associated subset of tax rule data that is applicable to an associated geographic location of the first endpoint device 12A. This enables the transaction tax engine container 14A to determine edge tax calculations applicable to the associated geographic location using the associated subset of tax rule data in an edge database 16. Likewise, a second endpoint device 12B and a third endpoint device 12C comprise corresponding transaction tax engine containers 14B, 14C. As such, each endpoint device 12A, 12B, 12C has a different tax configuration based at least upon the associated geographic location. While depicted in FIG. 1 with three endpoint devices, the computing system 10 can comprise two or more than three endpoint devices in other examples.

As discussed above, tax rules around the world change with sufficient frequency to require regular updates to the corresponding plurality of transaction tax engine containers 14 at the plurality of endpoint devices 12. For example, the computing system 10 may update the corresponding plurality of transaction tax engine containers 14 by providing a new container image for deployment. However, generating, deploying, and validating a new container image can consume various resources along with time which may not support the frequency in which the tax rules around the world change. Further, the endpoint devices 12 may not be able to determine the edge tax calculations during deployment of the new container images.

To address such issues, the computing system 10 utilizes a micro patch 20, a patch generation module 22 on the transaction tax server 18 for publishing the micro patch 20, and a patch application module 24 to apply the micro patch 20 in the corresponding transaction tax engine containers 14. Further, the micro patch 20 is configured to include the tax rules that have changed and exclude the tax rules that have not changed as will be discussed. Additionally, an administrative interface 26 on the transaction tax server 18 enables user communication throughout the generation and deployment processes.

As depicted, the computing system 10 includes a registry server 27 along with the transaction tax server 18. The registry server 27 hosts a patch registry 28 for staging the micro patch 20 between the transaction tax server 18 and the plurality of endpoint devices 12. The patch registry 28 can be configured to provide revision control for multiple micro patches 20. In some examples, the transaction tax server 18 and/or the registry server 27 can be hosted in a data center, for example, of a tax platform operator. Alternatively, the transaction tax server 18 can be configured by the tax platform operator to be hosted at a client-specified data center under control of the tax client, for performance, security, privacy, and/or export compliance reasons. In other examples, the registry server 27 can be provided as a platform as a service by another party.

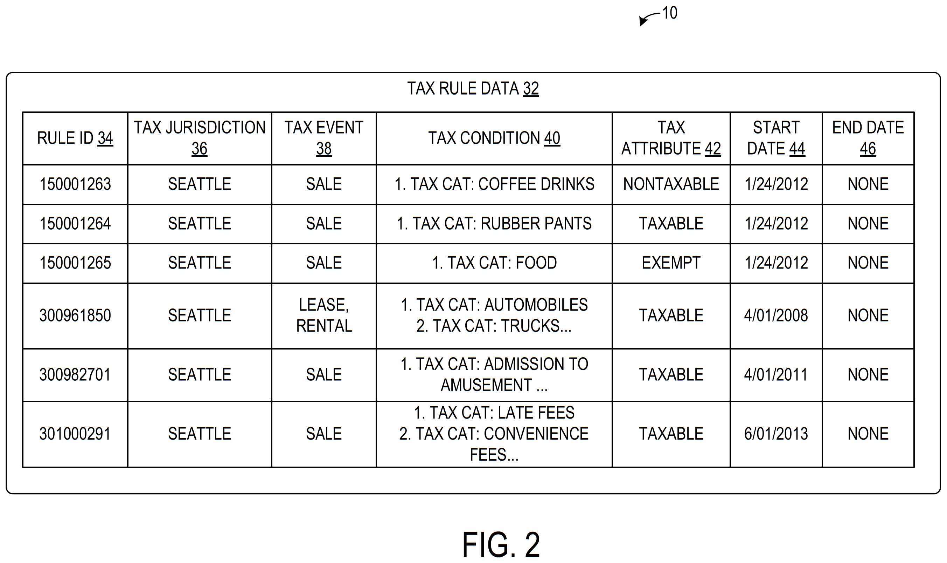

The transaction tax server 18 also comprises a global tax rules database (DB) 30 that includes tax rule data 32 for the various tax rules around the world. An example of the tax rule data 32 is shown in FIG. 2. The tax rule data 32 includes a rule identification (ID) 34, a tax jurisdiction 36, a tax event 38, a tax condition 40, a tax attribute 42, a start date 44, and an end date 46. The rule ID 34 is an identifier for an individual tax rule and can be numeric or any suitable alphanumeric sequence. For example, the rule ID 34 can be used as a key for querying the tax rule data 32. Further, the tax jurisdiction 36, the tax event 38, the tax condition 40, the tax attribute 42, the start date 44, and the end date 46 are referred to as associated fields for the rule ID 34.

More particularly, the tax jurisdiction 36 corresponds to a geographical area where the associated rule ID 34 is applicable. For example, the tax jurisdiction 36 can be selected from a list of global tax jurisdictions. The tax event 38 includes information relating to the nature of a transaction, such as "sale", "lease", or "rental" as examples. The tax condition 40 indicates one or more taxable categories associated with the rule ID 34 and can be used to identify one or more products where the associated rule ID 34 is applied. Here, "products" means tangible and intangible products and service offerings, e.g., both goods and services that can be subject to transaction taxes, such as sales and use tax, lodging and occupancy tax, etc. Additionally, the tax attribute 42 indicates how to tax the taxable category, such as "taxable", "nontaxable", "exempt", as examples. When the tax attribute 42 includes "taxable", the tax rule has an associated tax amount field (the tax amount field is not depicted in FIG. 2) which can be in the form of a fee or rate. For example, the associated tax amount field can include an actual rate or fee to apply. Alternatively, the associated tax amount field can include an indicator, for example a pointer, that a standard tax amount of the tax jurisdiction 36 is to be applied.

Additionally, the start date 44 indicates a start to a validity period where the associated rule ID 34 is applicable. Likewise, the end date 46 can indicate an end to the validity period, for example, when the associated rule ID 34 is set to expire. Alternatively, the end date 46 can indicate that there is no planned end to the validity period for the associated rule ID 34, such as depicted in FIG. 2 with "none". Collectively, the start date 44 and the end date 46 are referred to as effective dates for the validity period of the associated rule ID 34. FIG. 2 shows a portion of the tax rule data for a single tax jurisdiction, the city of Seattle, in the tax rule data 32. In other examples, the tax rule data 32 can have another configuration and/or include other suitable information.

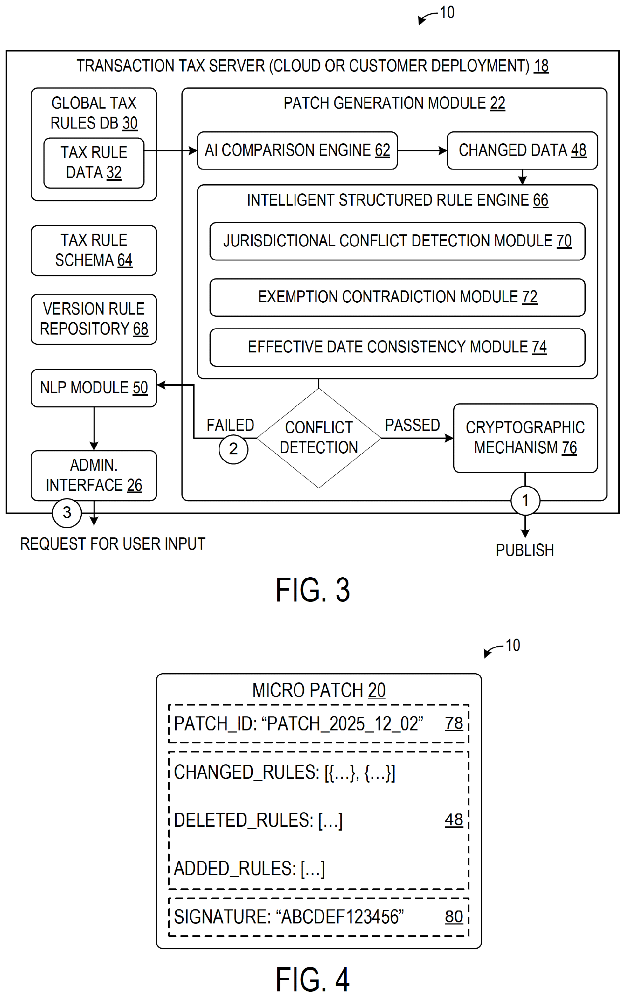

Returning to FIG. 1, the patch generation module 22 is configured to detect changes in the global tax rules database 30 to determine changed data 48 for the tax rule data 32. As used herein, the term "changed data" refers to relevant information in the tax rule data 32 that has been updated, added, or deleted as a result of changes to the tax rules around the world. The patch generation module 22 is further configured to perform conflict detection on at least the changed data 48 as will be discussed with reference to FIG. 3.

When the conflict detection is successful, the patch generation module 22 publishes the micro patch 20, as indicated by (1). Specifically, the micro patch 20 is published with the changed data 48 and excluding a remainder of the tax rule data 32 in the global tax rules database 30. In such a configuration, the micro patch 20 excludes information in the global tax rules database 30 that is unchanged. This enables the micro patch 20 to have a relatively smaller size than a transaction tax engine container image. In contrast, when the conflict detection has failed, as indicated by (2), the patch generation module 22 can send to the administrative interface 26 a request for user input through a natural language processing (NLP) module 50. In such a configuration, issues detected in the conflict detection can be sent to a client interface 52 on a client administrative device 54 through the administrative interface 26 for user resolution, as indicated by (3).

The NLP module 50 is configured to generate a natural language output based at least upon received input. As a specific example, the NLP module 50 can receive from the patch generation module 22 information on the issues detected in the conflict detection and generate explanations for those issues along with corresponding suggestions in a conversational tone. The corresponding suggestions can help aid an end user with the user resolution of the issues. Likewise, the NLP module 50 can also generate other messages for presentation in the client interface 52. In various examples, the NLP module 50 can utilize machine learning, suitable language models, deep learning models (e.g., neural networks, statistical networks, and the like), and/or other suitable artificial intelligence (AI) algorithms to transform the received input(s) into natural language output(s).

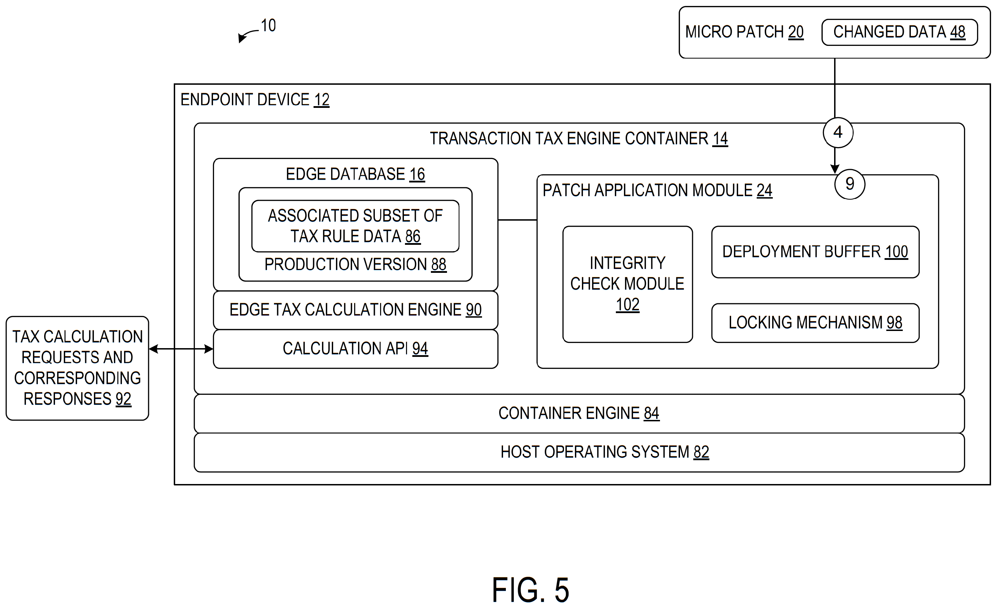

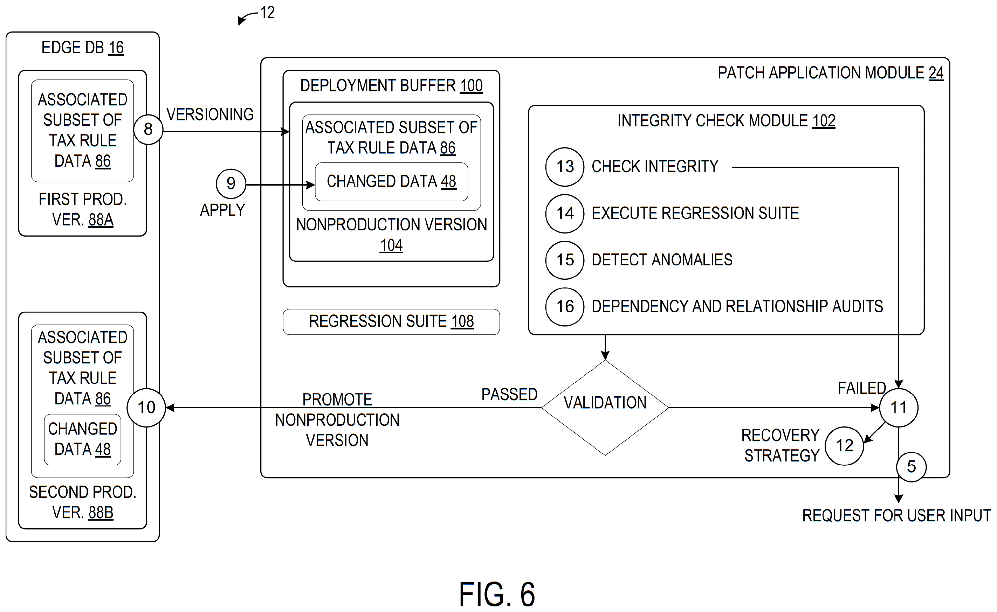

Returning to the deployment of the micro patch 20, when the micro patch 20 is available in the patch registry 28, each destination device can download the micro patch 20, as indicated by (4). In the depicted example, the destination devices include the plurality of endpoint devices 12. In other examples, the destination devices can include other suitable computing devices of the tax client. At each endpoint device 12, the patch application module 24 applies the micro patch 20 and then performs validation on the applied micro patch as will be discussed in more detail with reference to FIGS. 5 and 6. Further, when the validation has passed, the edge database 16 can be updated with the changed data 48.

In contrast, when the validation has failed, the patch application module 24 can send a request for user input to the NLP module 50, as indicated by (5), for user resolution of issues detected in the validation in a similar manner as discussed with reference to issues in the conflict detection. Further, the patch application module 24 can be configured to automatically perform a recovery strategy when the validation has failed. Such a configuration helps to prevent a partial update to the edge database 16 which may result in data inconsistency. In some examples, the issues detected in the validation and/or suitable status information from the corresponding plurality of transaction tax engine containers 14 can be presented in a dashboard 56 in the client interface 52.

Further, the client interface 52 can send user selected deployment configuration settings 60 to the transaction tax server 18 for storage. The deployment configuration settings 60 specify a selected deployment window for updating the edge databases 16, a selected recovery strategy for the edge databases 16, a selected locking scope defining a portion of the edge database 16 to look during the update, and/or other relevant settings.

Additionally, the computing system 10 can generate a deployment plan 58 based at least upon the deployment configuration settings 60 and/or historical deployment patterns. In such a configuration, the deployment plan 58 can summarize the when and how of deploying the micro patch 20 in the client interface 52, as indicated by (6) and request for user approval before executing the deployment plan 58. In some examples, the NLP module 50 can generate clear natural language for the content of the deployment plan 58. FIG. 1 is illustrative. In other examples, the computing system 10 can have additional suitable components.

FIG. 3 depicts a detailed schematic view of the transaction tax server 18 utilizing the patch generation module 22. Briefly, the patch generation module 22 includes an AI comparison engine 62 to determine the changed data 48 for the tax rule data 32 in the global tax rules database 30. Here, a tax rule schema 64 defines which associated fields for the rule ID 34 are relevant fields to be compared. Additionally, the patch generation module 22 includes an intelligent structured rule engine 66 for performing AI-driven conflict detection on at least the changed data 48 to help maintain data consistency in the micro patch 20.

More particularly, the AI comparison engine 62 is configured to detect corresponding change(s) in the relevant fields within the tax rule data 32. By utilizing the tax rule schema 64, the AI comparison engine 62 can isolate the relevant fields within the tax rule data 32 for comparison and ignore a remainder of the associated fields. Such a configuration can help to increase comparison performance over comparing all the fields in the tax rule data 32. Additionally, the AI comparison engine 62 can classify the changes in the relevant fields as a numeric change or a structural change. As a specific example, the AI comparison engine 62 can classify a detected change to a tax rate (e.g., rate 7.00% →7.25%) as a numeric change. One example of a structural change includes an effective date change with a detected shift in the start date 44 and/or the end data 46. Another example includes a change in tax applicability where the associated rule ID 34 now applies to a different product category and/or tax jurisdiction. Additionally, the AI comparison engine 62 is also configured to detect a change in the global list of tax jurisdictions where a tax jurisdiction is added or removed, for example. Identifying such structural changes may help to update downstream conflict checks and/or validation.

More particularly, the AI comparison engine 62 is configured to perform field-by-field comparisons on the relevant fields within the tax rule data 32. Briefly, for a selected rule ID, the AI comparison engine 62 compares a corresponding pair of selected relevant fields between a new version and a previous version of the selected rule ID. When the corresponding pair of relevant fields are different, the AI comparison engine 62 determines that the selected relevant field has changes and thus is included in the changed data 48.

Here, the AI comparison engine 62 utilizes a rule version repository 68 to obtain the previous versions of the selected rule ID. The rule version repository 68 is configured as a structured representation of the relevant fields in the tax rule data 32, for example, in a JSON (JavaScript Object Notation) file format or in database records with defined fields. Further, a version identifier can be stored with each relevant field and/or associated rule ID in the rule version repository 68. Examples of version identifiers include timestamps, a dedicated versioning database, and other suitable version controls. In various examples, the rule version repository 68 can be configured to store the relevant fields and/or deltas in the relevant fields with a history table. Alternatively or additionally, the rule version repository 68 can include suitable data structures like hash maps keyed by the rule ID 34. For example, using a cryptographic hash to store associated information with the rule ID 34 can quickly indicate whether any part of the associated information has changed. In other examples, other suitable hash maps can be used. The rule version repository 68 helps to enable quick access to past and current versions of the relevant fields for the AI comparison engine 62.

After determining the changed data 48, the patch generation module 22 executes the intelligent structured rule engine 66 for conflict detection of at least the changed data 48. Such conflict detection helps to maintain coherent rule application when applying the micro patch 20. Here, the intelligent structured rule engine 66 is configured to detect a logical overlap between two or more rule IDs 34, and determine whether the logical overlap has a contradiction. The two or more rule IDs 34 have a logical overlap when they are applicable to a same transaction tax calculation.

The intelligent structured rule engine 66 can utilize a decision tree algorithm, a set of structured rules, and/or another suitable deterministic rule-based AI algorithm. For example, the decision tree algorithm can be configured to determine whether multiple rule IDs 34 have overlapping dates, overlapping tax jurisdictions, and a same tax category and thus may concurrently apply to a same transaction tax calculation and have logical overlap. In some examples, a machine-learning classifier can be trained on historical rule changes to help predict likely issues in the conflict detection.

Additionally, the intelligent structured rule engine 66 can be configured to handle issues detected in the conflict detection in various manners. The information pertaining to the issues detected can be sent to the NLP module 50 for user resolution through the administrative interface 26, as discussed. Alternatively or additionally, the set of structured rules can include structured rules for contradiction resolution, such as override patterns, for example. This can enable a portion of the issues detected in the conflict detection to be automatically handled by the intelligent structured rule engine 66. In some such examples, suitable machine learning algorithms can be trained on user acceptance and/or historical override data to maintain the structured rules for the contradiction resolution. Such a configuration helps the intelligent structured rule engine 66 to become more accurate with each release cycle of the micro patch 20. Further, such machine learning can further help to determine recommendations for the issues detected. This can help to reduce manual effort for the contradiction resolution compared to current solutions that may rely on manual reviews for all contradictions found in a micro patch release.

A jurisdictional conflict module 70 is configured to detect logical overlaps for tax rules in different tax jurisdictions and to determine whether each logical overlap has a jurisdictional conflict. For example, the jurisdictional conflict module 70 can utilize a jurisdiction hierarchy to determine precedence and/or overrides between overlapping tax jurisdictions. In some examples, the jurisdictional conflict module 70 can be configured to determine that the conflict detection has failed when jurisdictional conflicts are detected to thereby reject publishing such a micro patch. By systematically comparing each rule ID in the changed data 48 against related rules that have not changed, the jurisdictional conflict module 70 can help to ensure there is a single source of truth for a given tax jurisdiction hierarchy.

Further, an exemption contradiction module 72 is configured to detect logical overlaps with overlapping tax exemptions. The exemption contradiction module 72 can determine whether the overlapping tax exemptions are meant to stack or to narrow a tax scope of one of the related rule IDs. The exemption contradiction module 72 also is configured to detect logical overlaps where multiple tax rules have contradictory tax exemptions. An example scenario of a contradictory tax exemption includes a logical overlap between rule IDs having a tax exemption and a tax attribute of "taxable" for a same tax category.

Additionally, an effective date module 74 is configured to determine whether multiple tax rules have corresponding validity periods with desired tax rule applicability. More specifically, the effective date module 74 can detect unintended overlaps and/or unintended gaps in the corresponding validity periods of the multiple tax rules. Here, the desired tax rule applicably can be defined in the decision tree algorithm and/or the set of structured rules. When the unintended overlap and/or gap is detected, the effective date module 74 can adjust an end data and/or a start date of the multiple related tax rules in some scenarios.

The effective date module 74 can also be configured to detect retroactive dates in the changed data 48. Such retroactive dates can include a date that is prior to a last known update, overlapping a selected closing period, and the like. Updating tax rules having such retroactive dates may complicate tax reporting for the tax client. Therefore, the effective date module 74 can be configured to issue a warning and/or block publishing such a micro patch to avoid changes with the retroactive tax in various examples.

The intelligent structured rule engine 66 can be configured to detect other suitable contradictions in various examples. For example, the intelligent structured rule engine 66 can be configured to detect tax rate conflicts in a similar manner to the contradictory tax exemptions, and/or other tax hierarchy issues within the changed data 48. Therefore, the intelligent structured rule engine 66 as described can programmatically help to enforce legal and/or logical coherence of the tax rules in the micro patch 20.

As discussed, the patch generation module 22 is configured to publish the micro patch 20, at (1), when the conflict detection is successful. The micro patch 20 can include JSON format, binary representation, or other suitable structed file format in various examples. Further, the patch generation module 22 publishes the micro patch 20 including the changed data 48 and excluding a remainder of the tax rule data 32 in the global tax rules database 30. In such a configuration, the micro patch 20 includes the relevant fields that have changes and excludes other fields that have no changes in the tax rule data 32. In some such examples, the relevant fields with changes can be in the form of database instructions. Such a granular notice can enable downstream scripts for targeted updates of the relevant field(s) with changes in the edge database 16 along with reducing a size of the micro patch 20.

Additionally, the patch generation module 22 is configured to include a signature in the micro patch 20 utilizing a cryptographic mechanism 76. In various examples, the signature can include a JSON web token (JWT), a public key infrastructure (PKI) certificate, or another suitable token or certificate. Such authentication techniques help to maintain security of the micro patch 20 through transit to authorized recipients (e.g., the patch application module 24). In some examples, the micro patch 20 can further include a cryptographic hash or checksum representing an expected post-update state.

Thus, the patch generation module 22 configured as described herein above, can enable continuously updates to the edge databases 16 with a relatively higher granularity, and thus may increase efficiency in providing updated content to the endpoint devices 12 compared to shipping monolithic updates in container images. FIG. 3 is illustrative. The transaction tax server 18 can include additional components and/or have another suitable configuration in other examples.

An example of the micro patch 20 utilizing JSON format is shown in FIG. 4. As depicted, the micro patch 20 includes a patch identification (ID) 78, the changed data 48, and a cryptographic signature 80. The patch ID 78 is an identifier for an individual micro patch and can be numeric or any suitable alphanumeric sequence. Further, the changed data 48 is in the form of instructions where "deleted_rules" includes a list of rule IDs 34 to delete from the edge database 16. Likewise, "added_rules" includes a list of new rule IDs to add to the edge database 16. Additionally, the instructions for "changed_rules" includes the relevant fields and corresponding changes, along with the associated rule ID 34. The cryptographic signature 80 can be used for authentication of the micro patch 20. FIG. 4 is illustrative. In other examples, a micro patch can have another suitable configuration.

As mentioned, the micro patch 20 is downloaded to the patch application module 24 from the patch registry 28, at (4), to prepare an update to the edge database 16. More particularly, FIG. 5 shows a detailed schematic view of one of the endpoint devices 12 executing the transaction tax engine container 14 in a container environment. In such a configuration, the transaction tax engine container 14 can communicate with a host operating system 82 through a container engine 84 on the endpoint device 12. This enables the transaction tax engine container 14 to utilize communications mechanisms provided by the host operating system 82, for example, to download the micro patch 20.

Additionally, the transaction tax engine container 14 is configured with an associated subset of tax rule data 86 including a subset of the tax rule data 32 applicable to the associated geographic location of the endpoint device 12. Further, the edge database 16 comprises the associated subset of tax rule data 86 and excludes a remainder of the tax rule data 32 in the global tax rules database 30. In the depicted example, the edge database 16 is configured to use a production version 88 of the associated subset of tax rule data 86 for edge tax calculations. In such a configuration, the transaction tax engine container 14 is configured to determine the edge tax calculations applicable to the associated geographic location. As a specific example, an edge tax calculation engine 90 receives tax calculation requests 92 using a calculation application programming interface (API) 94, determines the edge tax calculations for the requests using the production version 88 in the edge database 16, and sends corresponding tax calculation responses 92 through the calculation API 94.

As discussed, an available micro patch is downloaded to prepare an update for the edge database 16. In various examples, the patch application module 24 can check the patch registry 28 for the available micro patch, and/or receive a push notification. After downloading the micro patch 20, the patch application module 24 can verify authenticity and/or data integrity of the micro patch 20, such as validating the cryptographic signature 80 in the micro patch 20, for example. This helps the patch application module 24 to accept authorized and/or to detect data loss in transit of the micro patch 20.

Before updating the edge database 16 with the changed data 48, a locking mechanism 98 locks at least a portion of the edge database 16, for example as specified in the deployment configuration settings 60. In various examples, the portion of the edge database 16 can include specific tables and/or specific rule IDs that correspond to the changed data 48. Such a configuration enables a smaller locking scope with a short downtime of the edge database 16 than locking the entirety of the edge database 16. Locking the portion of the edge database 16 can include locking write access to the production version 88 of the associated subset of tax rule data 86. Alternatively or additionally, locking the portion of the edge database 16 can include changing the edge database 16 to a transaction-safe mode (e.g., for read-only transactions), and/or other suitable locking techniques. This can help to provide data consistency in the edge database 16.

To further help with the data consistency, the patch application module 24 is configured to create a new version of the associated subset of tax rule data 86 in a deployment buffer 100 to apply the changed data 48 in the micro patch 20. Additionally, an integrity check module 102 is configured to validate the version of the associated subset of tax rule data 86 with the changed data 48 in the deployment buffer 100. Therefore, the patch application module 24 can prepare the update for the edge database 16 while enable uptime for the edge tax calculation engine 90. An example flowchart of the patch application module 24 utilizing the deployment buffer 100 and the integrity check module 102 is schematically shown in FIG. 6. Here, the edge database 16 is initially configured to use a first production version 88A of the associated subset of tax rule data 86 that does not include the changed data 48.

Here, the patch application module 24 has generated a nonproduction version 104 of the associated subset of tax rule data 86 in the deployment buffer 100, as indicated by (8). Further, the patch application module 24 has applied the changed data 48 to the nonproduction version 104, as indicated by (9). Therefore, the nonproduction version 104 includes the changed data 48. In examples where the changed data 48 comprises instructions, the patch application module 24 executes the instructions to include the changed data 48 in the nonproduction version 104. In other examples, the changed data 48 can be included in the nonproduction version 104 in another suitable manner.

The patch application module 24 executes the integrity check module 102 for validation of the nonproduction version 104. When the validation has passed, the patch application module 24 promotes the nonproduction version 104 to thereby configure the edge database 16 to use a second production version 88B of the associated subset of tax rule data 86 with the changed data 48, as indicated by (10). In such a manner, the patch application module 24 updates the edge database 16 with the changed data 48. After the update, the locking mechanism 98 unlocks the edge database 16 and retires the first production version 88A. In some examples, the first production version 88A can be retained in a rollback buffer after being retired. This can provide a safety net for post-deployment incidents with the edge database 16.

In contrast, when the validation has failed, as indicated by (11), the patch application module 24 sends the request for user input as discussed with reference to (5). Further, in response to detecting issues in the validation, the patch application module 24 executes a recovery strategy, as indicated by (12), where the edge database 16 maintains the configuration to use the first production version 88A of the associated subset of tax rule data 86 without the changed data 48. Such a recovery strategy can be executed automatically upon the validation failing and thereby helping to prevent a partial update to the edge database 16.

The integrity check module 102 performs the validation of the nonproduction version 104 by checking an integrity of the nonproduction version 104 in the deployment buffer 100, at (13). For example, checking the integrity can include determining a checksum for the nonproduction version 104 and comparing the checksum to a checksum of the micro patch 20. When the checksums do not match, the integrity check module 102 can be configured to skip the rest of the validation and directly determine that the validation has failed, at (11), to thereby execute the recovery strategy at (12).

When the checksums match, the validation moves to executing, at (14), a regression suite 108 on the nonproduction version 104. The regression suite 108 can include sample historical tax calculation test cases, defined tax calculation test cases, and/or other suitable data. For each test case in the regression suite 108, the integrity check module 102 generates a corresponding outcome using the nonproduction version 104.

The validation further includes detecting anomalous results in the outcomes from the regression suite 108, as indicated by (15). Detecting the anomalous results can include determining whether new runtime issues occurred during the execution of the regression suite 108. Alternatively or additionally, detecting the anomalous results can include determining whether the corresponding outcome of a selected test case is an expected result or an anomalous result. For example, an expected result can include a corresponding outcome that has a new value resulting from the changed data 48. Further, an expected result alternatively can include a corresponding outcome that has remained the same for a rule ID not in the changed data 48. In contrast, the anomalous result is an unexpected result and thus represents a functional issue of the nonproduction version 104.

The validation additionally includes dependency and relationship audits between two or more related rule IDs, as indicated by (16). The dependency and relationship audits can include determining whether inherited attributes are valid for a dependent rule ID. In some examples, determining whether the inherited attributes are valid can include determining whether linked tax exemptions and/or tax rates have remained correctly linked in the nonproduction version 104. Alternatively or additionally, determining whether the inherited attributes are valid can include detecting whether a dangling reference exists within the nonproduction version 104. As a specific example, the integrity check module 102 can generate a graph of tax rule dependencies from the nonproduction version 104 and then traverse the graph to determine whether any of the inherited attributes comprises a broken link. As another example, hashes for groups of related rule IDs can also be used to find broken links. Further, determining whether the inherited attributes are valid can include verifying that cascading tax jurisdiction rates are combined and computed according to a tax hierarchy.

Thus, the integrity check module 102 performs the validation within the deployment buffer 100 to help determine functional correctness of the nonproduction version 104. Further, the deployment buffer 100 enables the patch application module 24 to prepare updates in a near-real-time manner in response to changes in the global tax rules database 30 without scheduling maintenance windows that incur downtown for the edge database 16. Additionally, when issues are detected in the validation, the patch application module 24 automatically executes the recovery strategy without human intervention which can reduce downtime compared to current manual recovery procedures. FIG. 6 is illustrative. In other examples, the patch application module 24 can update the edge database 16 in another suitable manner.

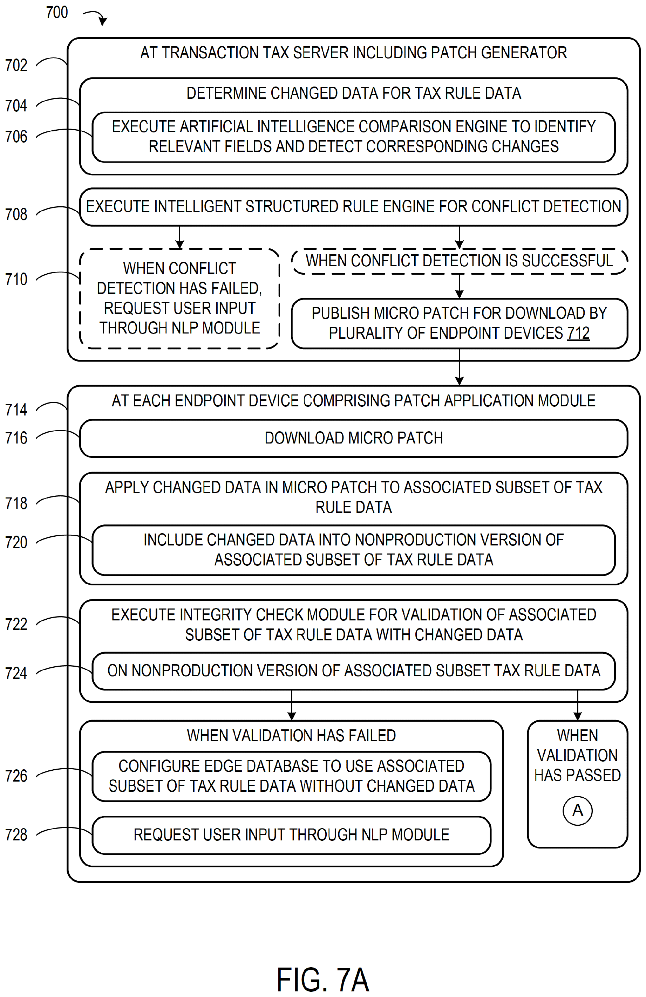

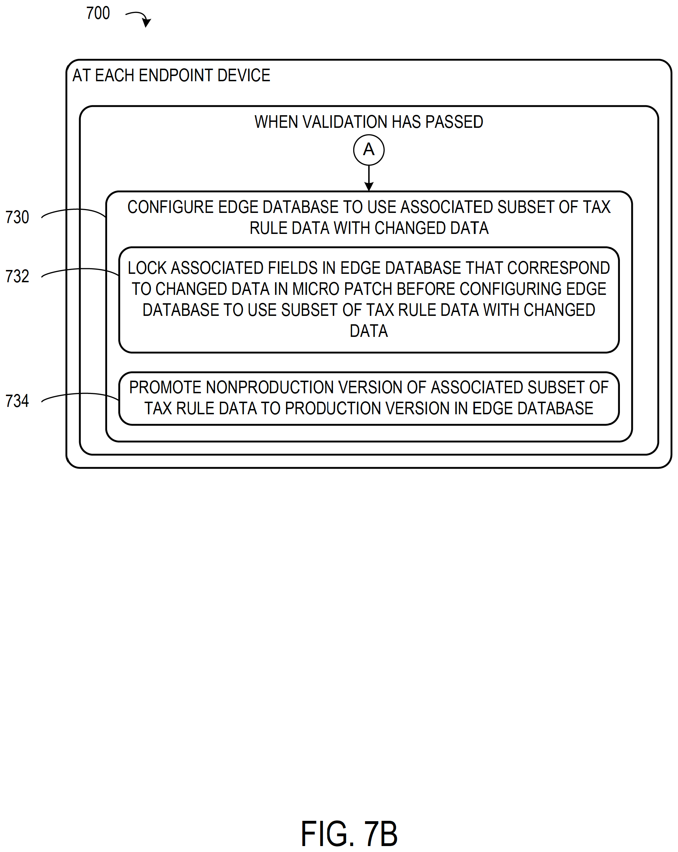

FIGS. 7A and 7B show a flowchart of an example method 700 for updating edge databases on a plurality of endpoint devices in different geographic locations. Here, the method 700 is performed on a computing system with a transaction tax server and the plurality of endpoint devices. For example, the computing system 10 can perform the method 700. Additionally, the transaction tax server includes a global tax rules database including tax rule data for multiple products and multiple tax jurisdictions. Further, each endpoint device comprises a transaction tax engine container configured with an associated subset of tax rule data that is applicable to an associated geographic location of the endpoint device. As such, the transaction tax engine container includes an edge database comprising the associated subset of tax rule data and excluding a remainder of the tax rule data in the global tax rules database.

The method 700 uses a patch generation module on the transaction tax server, as indicated at 702, to generate a micro patch. More particularly, the method 700 comprises, at 704, determining changed data for the tax rule data using the patch generation module. In some examples, determining the changed data for the tax rule data comprises executing an artificial intelligence comparison engine to identify relevant fields in the tax rule data and detecting corresponding changes in one or more of the relevant fields, as indicated at 706. Such a configuration enables the method 700 to determine relevant fields with changes for inclusion in the micro patch and excludes fields without changes. In some examples, the method 700 can include, at 708, executing an intelligent structured rule engine for conflict detection of at least the changed data. This can help determine whether any conflict issues are associated with the micro patch. In some such examples, the method 700 further comprises requesting user input through an NLP module when the conflict detection has failed, as indicated at 710. Such a request for user input can help to obtain user resolution to issues detected in the conflict detection.

In contrast, when the conflict detection is successful, the method 700 moves to publishing, at 712, the micro patch for download by the plurality of endpoint devices. The micro patch includes the changed data and excludes a remainder of the tax rule data in the global tax rules database, as discussed herein. In some examples, the micro patch can be published to a patch registry.

Additionally, each endpoint device of the plurality of endpoint devices uses a corresponding transaction tax engine container, as indicated at 714, to apply the micro patch. More particularly, the method 700 comprises, at 716, downloading the micro patch, for example, from the patch registry. In other examples, the micro patch may be downloaded from another suitable source. The method 700 further comprises, at 718, applying the changed data in the micro patch to the associated subset of tax rule data using the patch application module. In some examples, applying the changed data in the micro patch to the associated subset of tax rule data comprises including the changed data into a nonproduction version of the associated subset of tax rule data, as indicated at 720. In some such examples, the micro patch can be applied to the nonproduction version in a deployment buffer.

In some examples, the patch application module can include an integrity check module as discussed with reference to FIG. 6. In such examples, the method 700 includes executing the integrity check module for validation of the associated subset of tax rule data with the changed data, as indicated at 722. In examples with the nonproduction version of the associated subset of tax rule data, the method 700 comprises, at 724, executing the integrity check module on the nonproduction version of the associated subset of tax rule data. This enables the patch application module to prepare the nonproduction version prior to updating the edge database and thereby enabling the edge database to maintain an uptime.

When the validation has failed, the method 700 moves to configuring, at 726, the edge database to use the associated subset of tax rule data without the changed data for edge tax calculations at the endpoint device. Such a recovery strategy can be executed automatically in response to the validation failing in some examples. Further, when the validation has failed, the method 700 can optionally comprise, at 728, requesting user input through an NLP module on the transaction tax server.

In contrast, when the validation has passed, the method 700 moves to configuring, at 730, the edge database to use the associated subset of tax rule data with the changed data for the edge tax calculations at the endpoint device as shown in FIG. 7B. Configuring the edge database to use the associated subset of tax rule data with the changed data can comprise locking associated fields in the edge database that correspond to the changed data in the micro patch before configuring the edge database to use the associated subset of tax rule data with the changed data, as indicated at 732. In examples using the nonproduction version of the associated subset of tax rule data, configuring the edge database to use the associated subset of tax rule data with the changed data comprises promoting the nonproduction version of the associated subset of tax rule data to a production version in the edge database, as indicated at 734.

Using the above-described systems and methods, a micro patch as disclosed herein can be used to update an edge database within a containerized edge environment without having to recreate and re-pull an entire new container image. Further, the micro patch can be deployed relatively faster than deploying entire container images, thereby enabling micro patches to be released at a relatively higher frequency along with delivery of the changed data for near real-time edge application. Additionally, the micro patch enables targeted changes that can be applied to a corresponding tax configuration of an endpoint device. This helps updating multiple edge databases across different geographic regions along with reducing downtime to update the edge databases.

In some embodiments, the methods and processes described herein may be tied to a computing system of one or more computing devices. In particular, such methods and processes may be implemented as a computer-application program or service, an application-programming interface (API), a library, and/or other computer-program product.

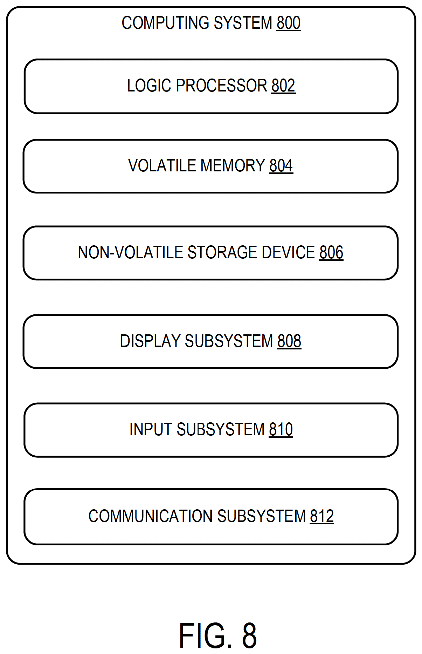

FIG. 8 schematically shows a non-limiting embodiment of a computing system 800 that can enact one or more of the methods and processes described above. Further, the computing system 10 can be enacted on computing system 800. Computing system 800 is shown in simplified form. Computing system 800 may embody the servers and computing devices described above. Computing system 800 may take the form of one or more personal computers, server computers, tablet computers, home-entertainment computers, network computing devices, gaming devices, mobile computing devices, mobile communication devices (e.g., smart phone), and/or other computing devices, and wearable computing devices such as smart wristwatches and head mounted augmented reality devices.

Computing system 800 includes a logic processor 802 volatile memory 804, and a non-volatile storage device 806. Computing system 800 may optionally include a display subsystem 808, input subsystem 810, communication subsystem 812, and/or other components not shown in FIG. 8.

Logic processor 802 includes one or more physical devices configured to execute instructions. For example, the logic processor may be configured to execute instructions that are part of one or more applications, programs, routines, libraries, objects, components, data structures, or other logical constructs. Such instructions may be implemented to perform a task, implement a data type, transform the state of one or more components, achieve a technical effect, or otherwise arrive at a desired result. For example, the logic processor 802 can be configured to execute the method 700.

The logic processor may include one or more physical processors (hardware) configured to execute software instructions. Additionally or alternatively, the logic processor may include one or more hardware logic circuits or firmware devices configured to execute hardware-implemented logic or firmware instructions. Processors of the logic processor 802 may be single-core or multi-core, and the instructions executed thereon may be configured for sequential, parallel, and/or distributed processing. Individual components of the logic processor optionally may be distributed among two or more separate devices, which may be remotely located and/or configured for coordinated processing. Aspects of the logic processor may be virtualized and executed by remotely accessible, networked computing devices configured in a cloud-computing configuration. In such a case, these virtualized aspects are run on different physical logic processors of various different machines, it will be understood.

Non-volatile storage device 806 includes one or more physical devices configured to hold instructions executable by the logic processors to implement the methods and processes described herein. When such methods and processes are implemented, the state of non-volatile storage device 806 may be transformed-e.g., to hold different data. For example, the non-volatile storage device can hold the global tax rules database 30, the deployment configuration settings 60, the tax rule schema 64, and/or the rule version repository 68.

Non-volatile storage device 806 may include physical devices that are removable and/or built in. Non-volatile storage device 806 may include optical memory (e.g., CD, DVD, HD-DVD, Blu-Ray Disc, etc.), semiconductor memory (e.g., ROM, EPROM, EEPROM, FLASH memory, etc.), and/or magnetic memory (e.g., hard-disk drive, floppy-disk drive, tape drive, MRAM, etc.), or other mass storage device technology. Non-volatile storage device 806 may include nonvolatile, dynamic, static, read/write, read-only, sequential-access, location-addressable, file-addressable, and/or content-addressable devices. It will be appreciated that non-volatile storage device 806 is configured to hold instructions even when power is cut to the non-volatile storage device 806.

Volatile memory 804 may include physical devices that include random access memory. Volatile memory 804 is typically utilized by logic processor 802 to temporarily store information during processing of software instructions. It will be appreciated that volatile memory 804 typically does not continue to store instructions when power is cut to the volatile memory 804.

Aspects of logic processor 802, volatile memory 804, and non-volatile storage device 806 may be integrated together into one or more hardware-logic components. Such hardware-logic components may include field-programmable gate arrays (FPGAs), program- and application-specific integrated circuits (PASIC / ASICs), program- and application-specific standard products (PSSP / ASSPs), system-on-a-chip (SOC), and complex programmable logic devices (CPLDs), for example.

The terms "module," "program," and "engine" may be used to describe an aspect of computing system 800 typically implemented in software by a processor to perform a particular function using portions of volatile memory, which function involves transformative processing that specially configures the processor to perform the function. Thus, a module, program, or engine may be instantiated via logic processor 802 executing instructions held by non-volatile storage device 806, using portions of volatile memory 804. It will be understood that different modules, programs, and/or engines may be instantiated from the same application, service, code block, object, library, routine, API, function, etc. Likewise, the same module, program, and/or engine may be instantiated by different applications, services, code blocks, objects, routines, APIs, functions, etc. The terms "module," "program," and "engine" may encompass individual or groups of executable files, data files, libraries, drivers, scripts, database records, etc.

When included, display subsystem 808 may be used to present a visual representation of data held by non-volatile storage device 806. The visual representation may take the form of a graphical user interface (GUI). As the herein described methods and processes change the data held by the non-volatile storage device, and thus transform the state of the non-volatile storage device, the state of display subsystem 808 may likewise be transformed to visually represent changes in the underlying data. Display subsystem 808 may include one or more display devices utilizing virtually any type of technology. Such display devices may be combined with logic processor 802, volatile memory 804, and/or non-volatile storage device 806 in a shared enclosure, or such display devices may be peripheral display devices.

When included, input subsystem 810 may comprise or interface with one or more user-input devices such as a keyboard, mouse, touch screen, or game controller. In some embodiments, the input subsystem may comprise or interface with selected natural user input (NUI) componentry. Such componentry may be integrated or peripheral, and the transduction and/or processing of input actions may be handled on- or off-board. Example NUI componentry may include a microphone for speech and/or voice recognition; an infrared, color, stereoscopic, and/or depth camera for machine vision and/or gesture recognition; a head tracker, eye tracker, accelerometer, and/or gyroscope for motion detection and/or intent recognition; as well as electric-field sensing componentry for assessing brain activity; and/or any other suitable sensor.

When included, communication subsystem 812 may be configured to communicatively couple various computing devices described herein with each other, and with other devices. Communication subsystem 812 may include wired and/or wireless communication devices compatible with one or more different communication protocols. As non-limiting examples, the communication subsystem may be configured for communication via a wireless telephone network, or a wired or wireless local- or wide-area network, such as a HDMI over Wi-Fi connection. In some embodiments, the communication subsystem may allow computing system 800 to send and/or receive messages to and/or from other devices via a network such as the Internet.

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

The subject matter of the present disclosure includes all novel and non-obvious combinations and sub-combinations of the various processes, systems and configurations, and other features, functions, acts, and/or properties disclosed herein, as well as any and all equivalents thereof.

## Claims

1. A computing system for updating edge tax databases, the computing system comprising:
a plurality of endpoint devices in different geographic locations; and
a transaction tax server including
a global tax rules database including tax rule data for multiple products and multiple tax jurisdictions, and
a patch generation module configured to
determine changed data for the tax rule data, and
publish a micro patch for download by the plurality of endpoint devices, the micro patch including the changed data and excluding a remainder of the tax rule data in the global tax rules database;
each endpoint device of the plurality of endpoint devices comprising a transaction tax engine container configured with an associated subset of tax rule data that is applicable to an associated geographic location of the endpoint device, the transaction tax engine container including
an edge database comprising the associated subset of tax rule data and excluding a remainder of the tax rule data in the global tax rules database, and
a patch application module configured to download the micro patch, and also to apply the changed data in the micro patch to the associated subset of tax rule data.

2. The computing system of claim 1, wherein the patch application module further is configured to
execute an integrity check module for validation of the associated subset of tax rule data with the changed data,
when the validation has failed, configure the edge database to use the associated subset of tax rule data without the changed data for edge tax calculations at the endpoint device, and
when the validation has passed, configure the edge database to use the associated subset of tax rule data with the changed data for the edge tax calculations at the endpoint device.

3. The computing system of claim 2, wherein the patch application module is configured to apply the changed data in the micro patch to the associated subset of tax rule data by including the changed data into a nonproduction version of the associated subset of tax rule data, and to execute the integrity check module on the nonproduction version of the associated subset tax rule data.

4. The computing system of claim 3, wherein the patch application module is configured to configure the edge database to use the associated subset of tax rule data with the changed data by promoting the nonproduction version of the associated subset of tax rule data to a production version in the edge database.

5. The computing system of claim 2, wherein the patch application module further is configured to lock associated fields in the edge database that correspond to the changed data in the micro patch before configuring the edge database to use the subset of tax rule data with the changed data for the edge tax calculations at the endpoint device.

6. The computing system of claim 1, wherein the patch generation module is configured to determine the changed data for the tax rule data by executing an artificial intelligence comparison engine to identify relevant fields in the tax rule data and detect corresponding changes in one or more of the relevant fields.

7. The computing system of claim 1, wherein the patch generation module further is configured to execute an intelligent structured rule engine for conflict detection of at least the changed data, and to request user input through a natural language processing (NLP) module when the conflict detection has failed, and wherein the patch generation module is configured to publish the micro patch when the conflict detection is successful.

8. A method for updating local edge tax databases on a plurality of endpoint devices in different geographic locations, the method comprising:
at a transaction tax server including a patch generation module and a global tax rules database including tax rule data for multiple products and multiple tax jurisdictions,
determining changed data for the tax rule data using the patch generation module;
publishing a micro patch for download by the plurality of endpoint devices, the micro patch including the changed data and excluding a remainder of the tax rule data in the global tax rules database;
at each endpoint device of the plurality of endpoint devices, the endpoint device comprising a transaction tax engine container configured with an associated subset of tax rule data that is applicable to an associated geographic location of the endpoint device, the transaction tax engine container including an edge database comprising the associated subset of tax rule data and excluding a remainder of the tax rule data in the global tax rules database,
downloading the micro patch and applying the changed data in the micro patch to the associated subset of tax rule data using a patch application module in the transaction tax engine container.

9. The method of claim 8, wherein the method further comprises, at each endpoint device,
executing an integrity check module within the patch application module for validation of the associated subset of tax rule data with the changed data,
when the validation has failed, configuring the edge database to use the associated subset of tax rule data without the changed data for edge tax calculations at the endpoint device, and
when the validation has passed, configuring the edge database to use the associated subset of tax rule data with the changed data for the edge tax calculations at the endpoint device.

10. The method of claim 9, wherein applying the changed data in the micro patch to the associated subset of tax rule data comprises including the changed data into a nonproduction version of the associated subset of tax rule data, and wherein the integrity check module is executed on the nonproduction version of the associated subset tax rule data.

11. The method of claim 10, wherein configuring the edge database to use the associated subset of tax rule data with the changed data comprises promoting the nonproduction version of the associated subset of tax rule data to a production version in the edge database.

12. The method of claim 9, further comprising, at each endpoint device, locking associated fields in the edge database that correspond to the changed data in the micro patch before configuring the edge database to use the subset of tax rule data with the changed data for the edge tax calculations at the endpoint device.

13. The method of claim 8, wherein determining the changed data for the tax rule data comprises executing an artificial intelligence comparison engine, at the transaction tax server, to identify relevant fields in the tax rule data and detecting corresponding changes in one or more of the relevant fields.

14. The method of claim 8, further comprising, at the transaction tax server, executing an intelligent structured rule engine for conflict detection of at least the changed data, and requesting user input through a natural language processing (NLP) module when the conflict detection has failed, and wherein the micro patch is published when the conflict detection is successful.

15. A computing system for updating edge tax databases, the computing system comprising:
a plurality of endpoint devices in different geographic locations; and
a transaction tax server including
a global tax rules database including tax rule data for multiple products and multiple tax jurisdictions, and
a patch generation module configured to
determine changed data for the tax rule data, and
publish a micro patch for download by the plurality of endpoint devices, the micro patch including the changed data and excluding a remainder of the tax rule data in the global tax rules database;
each endpoint device of the plurality of endpoint devices comprising a transaction tax engine container configured with an associated subset of tax rule data that is applicable to an associated geographic location of the endpoint device, the transaction tax engine container including
an edge database comprising the associated subset of tax rule data and excluding a remainder of the tax rule data in the global tax rules database, and
a patch application module configured to
download the micro patch,
apply the changed data in the micro patch to the associated subset of tax rule data,
execute an integrity check module for validation of the associated subset of tax rule data with the changed data,
when the validation has failed, configure the edge database to use the associated subset of tax rule data without the changed data for edge tax calculations at the endpoint device, and
when the validation has passed, configure the edge database to use the associated subset of tax rule data with the changed data for the edge tax calculations at the endpoint device.

16. The computing system of claim 15, wherein the patch application module further is configured to request user input through a natural language processing (NLP) module when the validation has failed.

17. The computing system of claim 15, wherein the patch application module is configured to apply the changed data in the micro patch to the associated subset of tax rule data by including the changed data into a nonproduction version of the associated subset of tax rule data, and to execute the integrity check module on the nonproduction version of the associated subset tax rule data.

18. The computing system of claim 15, wherein the patch application module further is configured to lock associated fields in the edge database that correspond to the changed data in the micro patch before configuring the edge database to use the subset of tax rule data with the changed data for the edge tax calculations at the endpoint device.

19. The computing system of claim 15, wherein the patch generation module is configured to determine the changed data for the tax rule data by executing an artificial intelligence comparison engine to identify relevant fields in the tax rule data and detect corresponding changes in one or more of the relevant fields.

20. The computing system of claim 15, wherein the patch generation module further is configured to execute an intelligent structured rule engine for conflict detection of at least the changed data, and to request user input through a natural language processing (NLP) module when the conflict detection has failed, and wherein the patch generation module is configured to publish the micro patch when the conflict detection is successful.
